# EUROPÄISCHE PATENTSCHRIFT

(11) **EP 4 110 129 B1**
(45) Veröffentlichungstag und Bekanntmachung des Hinweises auf die Patenterteilung: **02.12.2026**
(21) Anmeldenummer: 21707994.6
(22) Anmeldetag: 26.02.2021
(51) Int. Cl.: A43B 13/18, A43B 13/00, A43B 13/04, B29D 35/12, C08G 18/32, C08G 18/48, C08G 18/66, C08G 18/76, C08J 9/00, C08J 9/14, C08J 9/18, C08J 9/232, C08L 75/08

(54) **VERFAHREN ZUR HERSTELLUNG EINES TPU FÜR INMOLD ASSEMBLY EINER AUSSENSCHUHSOHLE AN ETPU**
A PROCESS FOR MAKING A TPU FOR INMOLD ASSEMBLY OF AN OUTER SHOE SOLE ON ETPU
PROCÉDÉ DE FABRICATION D'UN TPU D'ASSEMBLAGE DANS LE MOULE D'UNE SEMELLE EXTÉRIEURE DE CHAUSSURE SUR L'ETPU

(30) Priorität: 28.02.2020 EP 20160021
(43) Veröffentlichungstag der Anmeldung: 04.01.2023
(73) Patentinhaber: BASF SE, 67056 Ludwigshafen am Rhein (DE)
(72) Erfinder: SCHAEFER, Frank, 49448 Lemfoerde (DE); POESELT, Elmar, 49448 Lemfoerde (DE); SCHULZ, Florian, 49448 Lemfoerde (DE)
(74) Vertreter: BASF IP Association
(86) Internationale Anmeldenummer: PCT/EP2021/054827
(87) Internationale Veröffentlichungsnummer: WO 2021/170801

(56) Entgegenhaltungen:
- EP-A1- 3 248 493
- WO-A1-2008/087078
- WO-A1-2014/023794
- WO-A1-2016/187442

## Beschreibung

Die vorliegende Erfindung betrifft ein Verfahren zur Herstellung eines Formkörpers (FK) umfassend einen Formkörper (FK-1) aus einem thermoplastischen Elastomer (TPE-1) und ein geschäumtes Granulat aus einem thermoplastischen Elastomer (TPE-2), wobei der Formkörper (FK-1) eine Erweichungstemperatur TE(TPE-1) aufweist, die um höchstens 25°C von der Verarbeitungstemperatur TV(TPE-2) des thermoplastischen Elastomers (TPE-2) abweicht, wobei die Erweichungstemperatur bestimmt wird mittels TMA gemäß ISO11359-3:2014. Weiterhin betrifft die vorliegende Erfindung ein Verfahren zur Herstellung eines erfindungsgemäßen Formkörpers sowie die Verwendung für Anwendung im Bereich Sport, Industrie, Medizin, Sportmedizin, Sicherheit, Automobil und Konsumgüter, insbesondere als Schuhsohle, Teil einer Schuhsohle, als Fahrradsattel, Polsterung, Matratze, Unterlage, Griff, Schutzfolie oder Bauteil im Automobilinnen- und -außenbereich.

Schaumstoffe, insbesondere auch Partikelschaumstoffe, sind seit langem bekannt und in der Literatur vielfach beschrieben, z.B. in Ullmanns "Encyklopädie der technischen Chemie", 4. Auflage, Band 20, S. 416 ff.

Hochelastische, geschlossenzellige Schäume, wie Partikelschäume aus thermoplastischem Polyurethan, die im Autoklaven oder nach dem Extruderverfahren hergestellt werden, zeigen gute mechanische Eigenschaften und zum Teil auch gute Rückprallelastizitäten. Auch Hybridschäume aus Partikeln von thermoplastischen Elastomeren und Systemschaum oder Bindern sind bekannt. Abhängig von der Schaumdichte, der Herstellweise und dem Matrixmaterial kann insgesamt ein relativ breites Steifigkeitsniveau abgebildet werden. Auch durch eine Nachbehandlung des Schaumes wie Tempern können die Eigenschaften des Schaumes beeinflusst werden.

Partikelschaumstoffe auf Basis von thermoplastischem Polyurethan, in dieser Schrift auch als TPU bezeichnet, werden in WO 94/20568 A1 offenbart. Nachteilig an den in der WO 94/20568 beschriebenen TPU-Schaumstoffen ist der hohe Energieaufwand bei der Herstellung und Verarbeitung. Es wird ein Wasserdampfdruck von 4,5 bar bis 7 bar bei Temperaturen von 145°C bis 165°C angewendet. Weiterhin beschreibt die WO 94/20568 expandierte, d.h. aufgeschäumte, TPU-Partikel, die zu Formteilen verarbeitet werden können. Diese TPU-Schaumpartikel werden bei Temperaturen von 150°C und höher hergestellt und haben ausweislich der Beispiele eine Schüttdichte zwischen 55 und 180 g/L, was bei Transport und Lagerung dieser Partikel wegen des erhöhten Raumbedarfs von Nachteil ist.

In WO 2007/082838 A1 wird ein Partikelschaum auf Basis eines thermoplastischen Polyurethans offenbart, wobei das thermoplastische Polyurethan eine Shore-Härte zwischen A 44 und A 84 aufweist. Dabei wird die Shore-Härte des TPU an dem kompakten, d.h. nicht expandiertem TPU gemessen. Außerdem offenbart WO 2007/082838 A1 Verfahren zur Herstellung von expandierbarem, bevorzugt partikelförmigem, treibmittelhaltigem thermoplastischen Polyurethan sowie Verfahren zur Herstellung von expandiertem thermoplastischen Polyurethan sowie Verfahren zur Herstellung von Schaumstoff auf der Basis von thermoplastischem Polyurethan sowie derart erhältliche Schaumstoffe bzw. expandierte thermoplastische Polyurethane.

In der WO 2008/087078 A1 und der WO 2014/023794 A1 werden Hybridmaterialien beschrieben, enthaltend geschäumt Partikel aus thermoplastischen Polyurethanen, die in einer Matrix aus Polyurethanen eingebettet sind.

In der WO 2016/1877442 A1 werden Materialien beschrieben, die durch Verschweißen beschichteter Schaum-Partikel erhalten werden.

EP3248493 A1 offenbart ein Verfahren zur Herstellung von Schuhsolen, wobei ein Formteil aus einem thermoplastischen Polyurethan mit geschäumten Partikeln verschweißt wird, wobei dem thermoplastischen Polyurethan zur Verbesserung der Haftung Additive zugesetzt werden

Es zeigt sich aber, dass häufig zwar gute mechanische Eigenschaften erreicht werden können, aber die Verarbeitung der Partikel, insbesondere in Kombination mit weiteren Bauteilen, aufwendig ist. So ist je nach Verarbeitungsverfahren die Verwendung weiterer Materialien, beispielsweise eines zusätzlichen Klebstoffs nötig. Auch bei der Verarbeitung im Falle eines Prozesses, bei dem geschäumte Partikel in Gegenwart eines Bauteils verschweißt werden, kann es beispielsweise zu Problemen hinsichtlich Haftung und des Formerhalts der Konturen der Bauteile kommt.

Somit war es eine der vorliegenden Erfindung zugrundeliegende Aufgabe Verfahren zur Herstellung eines Formkörpers aus kompakten Bauteilen und geschäumten Partikeln bzw. geschäumten Granulaten bereitzustellen, wobei die Bauteile einfach miteinander kombiniert werden können und eine stabile Verbindung erhalten wird. Eine weitere Aufgabe der vorliegenden Erfindung war es, die entsprechenden erhaltenen Formkörper bereitzustellen.

Erfindungsgemäß wird diese Aufgabe gelöst durch ein Verfahren zur Herstellung eines Formkörpers (FK), umfassend die Schritte:
(a) Bereitstellen eines Formkörpers (FK-1), umfassend ein thermoplastisches Elastomer (TPE-1) in einer Form,
(b) Einfüllen eines geschäumten Granulats umfassend ein thermoplastisches Elastomer (TPE-2) in die Form, wobei das thermoplastische Elastomer (TPE-2) eine Verarbeitungstemperatur TV(TPE-2) aufweist,
(c) Herstellen des Formkörpers (FK) durch Verschweißen bei einer Temperatur im Bereich von 100 bis 170 °C,

wobei der Formkörper (FK-1) eine Erweichungstemperatur TE(TPE-1) aufweist, die um höchstens 25°C von der Verarbeitungstemperatur TV(TPE-2) des thermoplastischen Elastomers (TPE-2) abweicht, wobei die Erweichungstemperatur bestimmt wird mittels TMA gemäß ISO 11359-3:2014 weist und der Verarbeitungstemperaturbereich des thermoplastischen Elastomers (TPE-2) TV(TPE-2) im Bereich von 100 bis 170°C liegt,
wobei das thermoplastische Elastomer (TPE-1) in kompakter Form vorliegt und
wobei das thermoplastische Elastomer (TPE-1) und das thermoplastische Elastomer (TPE-2) ausgewählt sind aus der Gruppe bestehend aus thermoplastischen Polyurethanen, thermoplastischen Polyetheramiden, Polyetherestern oder Polyesterestern,
wobei das thermoplastische Elastomer (TPE-1) bei einer Temperatur unterhalb des Verarbeitungstemperatur TV(TPE-2) des thermoplastischen Elastomers (TPE-2) eine maximale Erweichung von weniger als 10% aufweist und in dem Verarbeitungstemperaturbereich TV(TPE-2) des thermoplastischen Elastomers (TPE-2) eine Erweichung im Bereich von 3 bis 12% aufweist, wobei die Erweichung bestimmt wird mittels TMA gemäß ISO 11359-3:2014 (Gewicht 15 g, Heizrate 20 K/min, runder Stempel mit Durchmesser 3 mm, TPU Probengeometrie: Durchmesser 4 mm und Dicke 2 mm),
wobei die Verarbeitungstemperatur dem Schmelzendotherm der Hartphase entspricht, bestimmt mittels DSC Messungen an für 10 Minuten bei 100 °C vorgetrockneten Proben mit einer Heizrate von 20 K/min gemäß DIN 11357-3:2013 und DIN EN 11357-1:2016.

Im Rahmen der vorliegenden Erfindung wird die Erweichungstemperatur des Formkörpers (FK-1) mittels TMA gemäß ISO 11359-3:2014 bestimmt. Dabei wird üblicherweise die Erweichungstemperatur an der Oberfläche des Formkörpers bestimmt, soweit nicht anders angegeben. Üblicherweise erfolgt die Messung an ungetemperten Proben.

Unter der Verarbeitungstemperatur wird im Rahmen der vorliegenden Erfindung die Temperatur bzw. der Temperaturbereich verstanden, bei der die geschäumten Granulate zu einem Formkörper verarbeitet werden können, also die Temperatur, bei der an der Oberfläche der geschäumten Granulate eine ausreichende Erweichung erfolgt, um die einzelnen Partikel miteinander verbinden zu können, und gleichzeitig die zellige Struktur des geschäumten Granulats weitestgehend erhalten bleibt.

Soweit nicht anders angegeben wird die Verarbeitungstemperatur des geschäumten Granulats mittels DSC Messungen bestimmt. Die Verarbeitungstemperatur ist im Rahmen der vorliegenden Erfindung der Temperaturbereich, in dem bei einer DSC Messung der vorgetrockneten Probe das oder die Schmelzendotherme der Hartphase liegen. Soweit nicht anders angegeben erfolgen DSC Messungen im Rahmen der vorliegenden Erfindung an vorgetrockneten Proben mit einer Heizrate von 20 K/min gemäß DIN 11357-3:2013.

Üblicherweise erfolgt die Vortrocknung für 10 Minuten bei 100 °C. Die Vortrocknung kann beispielsweise direkt in der DSC Apparatur erfolgen. Dabei wird der Beginn des Endotherms bzw. der Edotherme bei einer 10 mg TPU Probe, die direkt vor der Messung in der DSC Apparatur 10 Min bei 100 °C vorgetrocknet wurde, entsprechend DIN EN 11357-1:2016 und DIN EN 11357-3:2013 bestimmt.

Soweit nicht anders angegeben werden die TMA und DSC mit der gleichen Heizrate von 20 K/min gemessen.

Es konnte überraschend gezeigt werden, dass für eine gute Haftung das Erweichungsverhalten an der Oberfläche des Bauteils entscheidet ist und dem Erweichungsverhalten des verwendeten geschäumten Granulats ähneln muss, damit eine ausreichende Haftung beider Komponenten des erhaltenen Formkörpers vorliegt.

Es wurde gefunden, dass eine Verarbeitung insbesondere in einem Verarbeitungstemperaturbereich TV des thermoplastischen Elastomers TPE-2 gut erfolgen kann, wobei dieser Temperaturbereich in dem Bereich von 10% oberhalb der niedrigsten Temperatur des mittels DSC bestimmten Endotherms bis 10% unterhalb der maximalen Temperatur des mittels DSC bestimmten Endotherms liegt.

Besonders gute Ergebnisse konnten gefunden werden, wenn das thermoplastische Elastomer (TPE-1) bei einer Temperatur unterhalb des Verarbeitungstemperaturbereichs TV(TPE-2) des thermoplastischen Elastomers (TPE-2) eine maximale Erweichung von weniger als 10% aufweist und in dem Verarbeitungstemperaturbereich TV(TPE-2) des thermoplastischen Elastomers (TPE-2) eine Erweichung im Bereich von 3 bis 12% aufweist, wobei die Erweichung bestimmt wird mittels TMA gemäß ISO 11359-3:2014 (Gewicht 15 g, Heizrate 20 K/min, runder Stempel mit Durchmesser 3 mm, TPU Probengeometrie: Durchmesser 4 mm und Dicke 2 mm).

Erfindungsgemäß weist das thermoplastische Elastomer (TPE-1) bei einer Temperatur unterhalb des Verarbeitungstemperaturbereichs TV(TPE-2) des thermoplastischen Elastomers (TPE-2) eine maximale Erweichung von weniger als 10% aufweist und in dem Verarbeitungstemperaturbereich TV(TPE-2) des thermoplastischen Elastomers (TPE-2) eine Erweichung im Bereich von 3 bis 12% auf, wobei die Erweichung bestimmt wird mittels TMA gemäß ISO 11359-3:2014 (Gewicht 15 g, Heizrate 20 K/min, runder Stempel mit Durchmesser 3 mm, TPU Probengeometrie: Durchmesser 4 mm und Dicke 2 mm).

Die Verarbeitungstemperatur bzw., der Verarbeitungstemperaturbereich kann abhängig von der chemischen Natur des thermoplastischen Elastomers variieren. Erfindungsgemäß liegt die Verarbeitungstemperatur in einem Bereich von 100 bis 170°C, bevorzugt in einem Bereich von 110 bis 160°C, weiter bevorzugt in einem Bereich von 120 bis 150°C.

Der erfindungsgemäß erhaltene Formkörper umfasst einen Formkörper (FK-1) aus einem thermoplastischen Elastomer (TPE-1) und ein geschäumtes Granulat aus einem thermoplastischen Elastomer (TPE-2). Erfindungsgemäß liegt das thermoplastische Elastomer (TPE-1) in kompakter Form vor.

Geeignete thermoplastische Elastomere sind dem Fachmann an sich bekannt.

Erfindungsgemäß ist das thermoplastische Elastomer (TPE-1) ausgewählt ist aus der Gruppe bestehend aus thermoplastischen Polyurethanen, thermoplastischen Polyetheramiden, Polyetherestern oder Polyesterestern, und auch das thermoplastische Elastomer (TPE-2) ist aus dieser Gruppe ausgewählt ist.

Geeignete thermoplastische Polyetherester und Polyesterester können nach allen gängigen, literaturbekannten Verfahren durch Umesterung bzw. Veresterung von aromatischen und aliphatischen Dicarbonsäuren mit 4 bis 20 C-Atomen bzw. deren Estern mit geeigneten aliphatischen und aromatischen Di- und Polyolen hergestellt werden (vgl. "Polymer Chemistry", Interscience Publ., New York, 1961, S.111-127; Kunststoffhandbuch, Band VIII, C. Hanser Verlag, München 1973 und Journal of Polymer Science, Part A1, 4, Seiten 1851-1859 (1966)). Geeignete aromatische Dicarbonsäuren sind unter anderem z.B. Phthalsäure, Iso- und Terephthalsäure bzw. deren Ester. Geeignete aliphatische Dicarbonsäuren sind unter anderem z.B. Cyclohexan-1,4-Dicarbonsäure, Adipinsäure, Sebaconsäure, Azelainsäure und Decandicarbonsäure als gesättigte Dicarbonsäuren sowie Maleinsäure, Fumarsäure, Aconitsäure, Itoconsäure, Tetrahydrophthalsäure und Tetrahydroterephthalsäure als ungesättigte Dicarbonsäuren.

Als Diolkomponente eignen sich beispielsweise Diole der allgemeinen Formel HO-(CH2)n-OH, mit n = 2 bis 20, wie Ethylenglykol, Propandiol-(1,3), Butandiol-(1,4) oder Hexandiol-(1,6) Polyetherole der allgemeinen Formel HO-(CH2)n-O-(CH2)m-OH, wobei n gleich oder ungleich m und n bzw. m = 2 bis 20, ungesättigte Diole und Polyetherole wie beispielsweise Butendiol-(1,4); Diole und Polyetherole enthaltend aromatische Einheiten; sowie Polyesterole.

Neben den genannten Carbonsäuren bzw. deren Estern sowie den genannten Alkoholen können alle weiteren gängigen Vertreter dieser Verbindungsklassen zur Bereitstellung der erfindungsgemäß eingesetzten Polyetherester und Polyesterester verwendet werden.

Die thermoplastischen Polyetheramide können nach allen gängigen, literaturbekannten Verfahren durch Reaktion von Aminen und Carbonsäuren bzw. deren Estern erhalten werden. Amine und oder Carbonsäure enthalten hierbei zudem Ethereinheiten des Typs R-O-R, wobei R = organischer Rest (aliphatisch und / oder aromatisch). Im Allgemeinen werden Monomere der folgenden Verbindungsklassen eingesetzt: HOOC-R'-NH2, wobei R' aromatisch und aliphatisch, bevorzugt enthaltend Ethereinheiten des Typs R-O-R, sein kann, wobei R = organischer Rest (aliphatisch und / oder aromatisch); aromatische Dicarbonsäuren, unter anderem z.B. Phthalsäure, Iso- und Terephthalsäure bzw. deren Ester sowie aromatische Dicarbonsäuren enthaltend Ethereinheiten des Typs R-O-R, sein kann, wobei R = organischer Rest (aliphatisch und / oder aromatisch); aliphatische Dicarbonsäuren, unter anderem z.B. Cyclohexan-1,4-Dicarbonsäure, Adipinsäure, Sebaconsäure, Azelainsäure und Decandicarbonsäure als gesättigte Dicarbonsäuren sowie Maleinsäure, Fumarsäure, Aconitsäure, Itoconsäure, Tetrahydrophthalsäure und Tetrahydroterephthalsäure als ungesättigte sowie aliphatische Dicarbonsäuren enthaltend Ethereinheiten des Typs R-O-R, sein kann, wobei R = organischer Rest (aliphatisch und / oder aromatisch); Diamine der allgemeinen Formel H2N-R"-NH2, wobei R" aromatisch und aliphatisch, bevorzugt enthaltend Ethereinheiten des Typs R-O-R, wobei R = organischer Rest (aliphatisch und / oder aromatisch), sein kann; Lactame, wie beispielsweise ε-Caprolactam, Pyrrolidon oder Laurolactam; sowie Aminosäuren.

Neben den genannten Carbonsäuren bzw. deren Estern sowie den genannten Aminen, Lactamen und Aminosäuren können alle weiteren gängigen Vertreter dieser Verbindungsklassen zur Bereitstellung des erfindungsgemäß eingesetzten Polyetheramins verwendet werden.

Die erfindungsgemäß eingesetzten Polyetheramide, Polyetherester und Polyesterester werden vorzugsweise so gewählt, dass deren Schmelzpunkte bei ≤300°C, bevorzugt ≤250°C, insbesondere ≤220°C liegen.

Die erfindungsgemäß eingesetzten Polyetheramide, Polyetherester und Polyesterester können teilkristallin oder amorph sein.

Besonders vorteilhaft ist im Rahmen der vorliegenden Erfindung das thermoplastische Elastomer (TPE-1) ein thermoplastisches Polyurethan.

Die erfindungsgemäßen Formkörper weisen besonders vorteilhafte Eigenschaftsprofile auf, wenn das thermoplastische Elastomer (TPE-2) ein thermoplastisches Polyurethan ist. Gute Eigenschaften konnten insbesondere beobachtet werden, wenn sowohl das thermoplastische Elastomer (TPE-1) also auch das thermoplastische Elastomer (TPE-2) ausgewählt ist aus thermoplastischen Polyurethanen.

Thermoplastische Polyurethane sind aus dem Stand der Technik bekannt. Sie werden üblicherweise durch Umsetzung einer Polyisocyanatzusammensetzung mit einer Polyolzusammensetzung erhalten, wobei die Polyolzusammensetzung üblicherweise ein Polyol und einen Kettenverlängerer umfasst.

Im Rahmen der vorliegenden Erfindung werden üblicherweise thermoplastische Polyurethane eingesetzt, die durch Umsetzung einer Polyisocyanatzusammensetzung mit einer Polyolzusammensetzung erhalten oder erhältlich sind.

Erfindungsgemäß kann das thermoplastische Elastomer (TPE-1) ein thermoplastisches Polyurethan (TPU-1) sein, das erhalten oder erhältlich ist durch Umsetzung der Komponenten (i) bis (iii):
(i) eine Polyisocyanatzusammensetzung (IZ);
(ii) mindestens ein Kettenverlängerer (KV1),
(iii) eine Polyolzusammensetzung (PZ),
wobei die Komponenten mit einer Kennzahl im Bereich von 0,99 bis 1,02 umgesetzt werden und wobei das mittlere Molekulargewicht der in der Polyolzusammensetzung (PZ) enthaltenen Polyole im Bereich von 1250 g/mol bis 2500 g/mol liegt.

Üblicherweise enthält die Polyolzusammensetzung mindestens ein Polyol. Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Ebenso können Polycarbonate eingesetzt werden. Auch Copolymere können im Rahmen der vorliegenden Erfindung eingesetzt werden. Das zahlenmittlere Molekulargewicht der erfindungsgemäß eingesetzten Polyole liegt vorzugsweise zwischen 0,5x10³g/mol und 8 x10³ g/mol, bevorzugt zwischen 0,6 x10³ g/mol und 5 x10³ g/mol, insbesondere zwischen 0,8 x10³ g/mol und 3 x10³ g/mol.

Erfindungsgemäß sind Polyetherole geeignet, aber auch Polyesterole, Blockcopolymere sowie Hybrid Polyole wie z.B. Poly(ester/amid). Bevorzugte Polyetherole sind erfindungsgemäß Polyethylenglykole, Polypropylenglykole, Polyadipate, Polycarbonat(diol)e und Polycaprolacton.

Erfindungsgemäß kann die Polyolzusammensetzung ein Polyol ausgewählt aus der Gruppe bestehend aus Polyetherolen, Polyesterolen, Polycaprolactonen und Polycarbonaten enthalten.

Geeignete Blockcopolymere sind beispielsweise solche, die Ether und Esterblöcke aufweisen, wie beispielsweise Polycaprolacton mit Polyethylenoxid oder Polypropylenoxid-Endblöcken oder auch Polyether mit Polycaprolactonendblöcken. Bevorzugte Polyetherole sind erfindungsgemäß Polyethyleneglykole, Polypropylenglykole. Weiterhin bevorzugt ist Polycaprolacton.

Vorzugsweise weist das eingesetzte Polyol ein Molekulargewicht Mn im Bereich von 500 g/mol bis 4000 g/mol auf, bevorzugt im Bereich von 800 g/mol bis 3000 g/mol.

Erfindungsgemäß liegt das mittlere Molekulargewicht der in der Polyolzusammensetzung (PZ) enthaltenen Polyole vorzugsweise im Bereich von 1250 g/mol bis 2500 g/mol liegt
Erfindungsgemäß können auch Mischungen verschiedener Polyole eingesetzt werden. Bevorzugt haben die eingesetzten Polyole bzw. die Polyolzusammensetzung eine mittlere Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Beispielsweise wird zur Herstellung des thermoplastischen Polyurethans mindestens eine Polyolzusammensetzung eingesetzt, die mindestens Polytetrahydrofuran enthält. Erfindungsgemäß kann die Polyolzusammensetzung neben Polytetrahydrofuran auch weitere Polyole enthalten.

Erfindungsgemäß sind beispielsweise als weitere Polyole Polyether geeignet, aber auch Polyester, Blockcopolymere sowie Hybrid Polyole wie z.B. Poly(ester/amid). Geeignete Blockcopolymere sind beispielsweise solche, die Ether und Esterblöcke aufweisen, wie beispielsweise Polycaprolacton mit Polyethylenoxid oder Polypropylenoxid-Endblöcken oder auch Polyether mit Polycaprolactonendblöcken. Bevorzugte Polyetherole sind erfindungsgemäß Polyethyleneglykole, Polypropylenglykole. Weiterhin bevorzugt ist als weiteres Polyol Polycaprolacton.

Geeignete Polyole sind beispielsweise Polyetherole wie Polytrimethylenoxid oder Polytetramethylenoxid. Erfindungsgemäß kann die Polyolzusammensetzung ein Polyol ausgewählt aus der Gruppe bestehend aus Polyetherolen, Polyesterolen und Polycaprolactonpolyolen enthalten.

Besonders bevorzugte weist das Polytetrahydrofuran ein zahlenmittleres Molekulargewicht Mn im Bereich von 500 g/mol bis 5000 g/mol auf, weiter bevorzugt im Bereich von 750 bis 3000 g/mol, besonders bevorzugt im Bereich von 1000 bis 2500 g/mol. Vorzugsweise enthält die Polyolzusammensetzung ein Polyol ausgewählt aus der Gruppe bestehend aus Polytetrahydrofuranen mit einem zahlenmittleren Molekulargewicht Mn im Bereich von 1400 g/mol bis 2200 g/mol. Erfindungsgemäß können auch Mischungen verschiedener Polytetrahydrofurane eingesetzt werden, d.h. Mischungen aus Polytetrahydrofuranen mit unterschiedlichen Molekulargewichten.

Die Zusammensetzung der Polyolzusammensetzung kann im Rahmen der vorliegenden Erfindung in weiten Bereichen variieren. Beispielsweise kann der Gehalt an dem ersten Polyol, bevorzugt an Polytetrahydrofuran im Bereich von 15 % bis 85 % liegen, bevorzugt im Bereich von 20 % bis 80 %, weiter bevorzugt im Bereich von 25 % bis 75 %.

Erfindungsgemäß kann die Polyolzusammensetzung auch ein Lösungsmittel enthalten. Geeignete Lösungsmittel sind dem Fachmann an sich bekannt.

Geeignete Kettenverlängerer sind beispielsweise Verbindungen, die mindestens zwei gegenüber Isocyanaten reaktive funktionelle Gruppen aufweisen, beispielsweise HydroxylGruppen, Amino-Gruppen oder Thiol-Gruppen.

Als Kettenverlängerer geeignet sind beispielsweise Verbindungen, ausgewählt aus der Gruppe bestehend aus aliphatischen und aromatischen Diolen mit einem Molekulargewicht von <500 g/mol, bevorzugt <350 g/mol
Erfindungsgemäß bevorzugt werden als Kettenverlängerer Diole eingesetzt. Dabei können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,3-Propandiol, 1,4-Butandiol, 1,6-Hexandiol.

Auch verzweigte Verbindungen wie 1,4-Cyclohexyldimethanol, 2-Butyl-2-ethylpopandiol, Neopentylglykol, 2,2,4-Trimethyl-1,3-pentanediol, Pinakol, 2-Ethyl-1,3-hexandiol, 1,4-Cyclohexandiol, oder N-Phenyldiethanolamin sind im Rahmen der vorliegenden Erfindung als Kettenverlängerer geeignet. Ebenfalls geeignet sind gemischte Verbindungen wie beispielsweise 4-Aminobutanol.

Erfindungsgemäß können auch weitere Kettenverlängerer eingesetzt werden. Erfindungsgemäß können auch Verbindungen mit Amino-Gruppen eingesetzt werden, beispielsweise Diamine. Ebenso können Gemische von Diolen und Diaminen eingesetzt werden.

Im Rahmen der vorliegenden Erfindung kann die eingesetzte Menge des Kettenverlängerers und der eingesetzten Polyole in weiten Bereichen variieren.

Erfindungsgemäß wird zur Herstellung des thermoplastischen Polyurethans eine Polyisocyanatzusammensetzung eingesetzt, die mindestens ein Polyisocyanat enthält.

Bevorzugte Polyisocyanate sind im Rahmen der vorliegenden Erfindung Diisocyanate, insbesondere aliphatische oder aromatische Diisocyanate, weiter bevorzugt aromatische Diisocyanate. Geeignete Isocyanate sind dem Fachmann an sich bekannt.

Erfindungsgemäß ist es auch möglich, dass die Isocyanatzusammensetzung 4,4'-Methylendiphenyldiisocyanat und mindestens ein weiteres Methylendiphenyldiisocyanat enthält. Dabei wird erfindungsgemäß unter dem Begriff Methylendiphenyldiisocyanat 2,2'-, 2,4'-und/oder 4,4'-Diphenylmethandiisocyanat verstanden oder ein Gemisch aus zwei oder drei Isomeren. Somit kann erfindungsgemäß als weiteres Isocyanat 2,2'- oder 2,4'-Diphenylmethandiisocyanat eingesetzt werden oder ein Gemisch aus zwei oder drei Isomeren. Erfindungsgemäß kann die Polyisocyanatzusammensetzung auch weitere Polyisocyanate enthalten.

Des Weiteren können vorreagierte Produkte als Isocyanatkomponenten eingesetzt werden, bei denen ein Teil der OH-Komponenten in einem vorgelagerten Reaktionsschritt mit einem Isocyanat zur Reaktion gebracht werden. Die erhaltenen Produkte werden in einem nachfolgenden Schritt, der eigentlichen Polymerreaktion, mit den restlichen OH-Komponenten zur Reaktion gebracht und bilden dann das thermoplastische Polyurethan.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Geeignete aromatische Diisocyanate sind insbesondere 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethandiisocyanat und/oder Phenylendiisocyanat.

Besonders geeignet sind im Rahmen der vorliegenden Erfindung beispielsweise Polyisocyanatzusammensetzungen enthaltend 4,4'-MDI und 2,4-MDI, Polyisocyanatzusammensetzungen enthaltend 4,4'-MDI und 3,3,'-Dimethyl-4,4'-Diisocyanato-Diphenyl (TODI) oder Polyisocyanatzusammensetzungen enthaltend 4,4'-MDI und 1,5-Naphthylendiisocyanat (NDI).

Erfindungsgemäß können auch drei oder mehr Isocyanate eingesetzt werden. Üblicherweise enthält die Polyisocyanatzusammensetzung 4,4'-MDI in einer Menge von 2 bis 50% bezogen auf die gesamte Polyisocyanatzusammensetzung und das weitere Isocyanat in einer Menge von 3 bis 20% bezogen auf die gesamte Polyisocyanatzusammensetzung.

Bevorzugte Beispiele für höherfunktionelle Isocyanate sind Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurethe der vorgenannten Diisocyanate, ferner Oligomere, die durch gezielte Umsetzung von semiblockierten Diisocyanaten mit Polyolen, die im Mittel mehr als zwei und vorzugsweise drei oder mehr Hydroxy-Gruppen aufweisen, erhältlich sind.

Erfindungsgemäß kann die Polyisocyanatzusammensetzung auch ein oder mehrere Lösungsmittel enthalten. Geeignete Lösungsmittel sind dem Fachmann bekannt. Geeignet sind beispielsweise nicht reaktive Lösungsmittel wie Ethylacetat, Methylethylketon und Kohlenwasserstoffe.

Weiter können im Rahmen der vorliegenden Erfindung auch Vernetzer eingesetzt werden, beispielsweise die zuvor genannten höherfunktionellen Polyisocyanate oder Polyole oder auch andere höherfunktionale Moleküle mit mehreren gegenüber Isocyanaten reaktiven funktionellen Gruppen. Ebenso ist es im Rahmen der vorliegenden Erfindung möglich, eine Vernetzung der Produkte durch einen Überschuss der eingesetzten Isocyanatgruppen im Verhältnis zu den Hydroxylgruppen zu erreichen.

Erfindungsgemäß werden die Komponenten in einem Verhältnis eingesetzt, so dass das molare Verhältnis aus der Summe der Funktionalitäten der eingesetzten Polyolzusammensetzung zu der Summe der Funktionalitäten der eingesetzten Isocyanatzusammensetzung im Bereich von 1 zu 0,8 bis 1 zu 1,3 liegt. Bevorzugt liegt das Verhältnis im Bereich von 1 zu 0,9 bis 1 zu 1,2, weiter bevorzugt im Bereich von 1 zu 0,965 bis 1 zu 1,11, weiter bevorzugt im Bereich von 1 zu 0,97 bis 1 zu 1,11, weiter bevorzugt im Bereich von 1 zu 0,97 bis 1 zu 1,05, besonders bevorzugt im Bereich von 1 zu 0,98 bis 1 zu 1,03.

Eine weitere Größe, die bei der Umsetzung der Komponenten berücksichtigt wird, ist die Isocyanat-Kennzahl. Hierbei ist die Kennzahl definiert durch das Verhältnis der insgesamt bei der Umsetzung eingesetzten Isocyanatgruppen zu den Isocyanat-reaktiven Gruppen, also insbesondere den reaktiven Gruppen der Polyolkomponente. Bei einer Kennzahl von 1000 kommt auf eine Isocyanatgruppe ein aktives Wasserstoffatom. Bei Kennzahlen über 1000 liegen mehr Isocyanatgruppen als Isocyanat-reaktiven Gruppen vor. Bevorzugt liegt die Kennzahl bei der Umsetzung der Komponenten im Bereich von 965 bis 1110, beispielsweise im Bereich von 970 bis 1110, weiter bevorzugt im Bereich von 970 bis 1050, besonders bevorzugt im Bereich von 980 bis 1030.

Erfindungsgemäß können bei der Herstellung des thermoplastischen Polyurethans weitere Additive zugesetzt werden, beispielsweise Katalysatoren oder Hilfs- und Zusatzstoffe. Zusatzstoffe und Hilfsmittel sind dem Fachmann an sich bekannt. Erfindungsgemäß können auch Kombinationen aus mehreren Additiven eingesetzt werden. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Erfindungsgemäß weist das als (TPE-1) eingesetzte thermoplastische Polyurethan vorzugsweise einen Hartsegmentanteil im Bereich von 10 bis 20% auf, bevorzugt im Bereich von 14 bis 17%. auf. Der Hartsegmentanteil ist dabei der Anteil des thermoplastischen Polyurethans, der durch Isocyanat und Kettenverlängerer gebildet wird. Dabei wird im Rahmen der vorliegenden Erfindung der Hartsegmentanteil gemäß der in der WO 2007/118827 A1 offenbarten Formel bestimmt wobei ein Wert von 1,0 100% entspricht, d.h. ein Hartsegmentanteil von >50% entspricht einem Wert von > 0,50 gemäß der in der WO 2007/118827 A1 angegebenen Formel.

Erfindungsgemäß wird ein geschäumtes Granulat aus dem thermoplastischen Elastomer (TPE-2) eingesetzt. Verfahren zur Herstellung geschäumter Granulate aus thermoplastischen Elastomeren sind dem Fachmann an sich bekannt. Üblicherweise liegt die Schüttdichte des geschäumten Granulats im Bereich von 20 g/l bis 200 g/l, bevorzugt 50 g/l bis 180 g/l, besonders bevorzugt 60 g/l bis 150 g/l.

Beispielsweise liegt der Durchmesser der geschäumten Granulate zwischen 0,5 bis 20 bevorzugt 1 bis 15 und insbesondere zwischen 3 bis 12 mm. Bei nicht kugelförmigen, z.B. länglichen oder Zylinder förmigen geschäumten Granulaten ist mit Durchmesser die längste Abmessung gemeint.

Die vorliegende Erfindung betrifftein Verfahren zur Herstellung eines Formkörpers (FK), umfassend die Schritte:
(a) Bereitstellen eines Formkörpers (FK-1), umfassend ein thermoplastisches Elastomer (TPE-1) in einer Form,
(b) Einfüllen eines geschäumten Granulats umfassend ein thermoplastisches Elastomer (TPE-2) in die Form, wobei das thermoplastische Elastomer (TPE-2) eine Verarbeitungstemperatur TV(TPE-2) aufweist,
(c) Herstellen des Formkörpers (FK) durch Verschweißen bei einer Temperatur im Bereich von 100 bis 170 °C,

wobei der Formkörper (FK-1) eine Erweichungstemperatur TE(TPE-1) aufweist, die um höchstens 25°C von der Verarbeitungstemperatur TV(TPE-2) des thermoplastischen Elastomers (TPE-2) abweicht, wobei die Erweichungstemperatur bestimmt wird mittels TMA gemäß ISO 11359-3:2014 und der Verarbeitungstemperaturbereich des thermoplastischen Elastomers (TPE-2) TV(TPE-2) im Bereich von 100 bis 170°C liegt,
wobei das thermoplastische Elastomer (TPE-1) in kompakter Form vorliegt und
wobei das thermoplastische Elastomer (TPE-1) und das thermoplastische Elastomer (TPE-2) ausgewählt sind aus der Gruppe bestehend aus thermoplastischen Polyurethanen, thermoplastischen Polyetheramiden, Polyetherestern oder Polyesterestern,
wobei das thermoplastische Elastomer (TPE-1) bei einer Temperatur unterhalb des Verarbeitungstemperatur TV(TPE-2) des thermoplastischen Elastomers (TPE-2) eine maximale Erweichung von weniger als 10% aufweist und in dem Verarbeitungstemperaturbereich TV(TPE-2) des thermoplastischen Elastomers (TPE-2) eine Erweichung im Bereich von 3 bis 12% aufweist, wobei die Erweichung bestimmt wird mittels TMA gemäß ISO 11359-3:2014 (Gewicht 15 g, Heizrate 20 K/min, runder Stempel mit Durchmesser 3 mm, TPU Probengeometrie: Durchmesser 4 mm und Dicke 2 mm),
wobei die Verarbeitungstemperatur dem Schmelzendotherm der Hartphase entspricht, bestimmt mittels DSC Messungen an für 10 Minuten bei 100 °C vorgetrockneten Proben mit einer Heizrate von 20 K/min gemäß DIN 11357-3:2013 und DIN EN 11357-1:2016.

Bezüglich der bevorzugten Ausführungsformen wird auf die obigen Ausführungen verwiesen.

Erfindungsgemäß wird der Formkörper (FK) hergestellt, indem zunächst gemäß Schritt (a) der Formkörper (FK-1) in einer geeigneten Form bereitgestellt wird und dann gemäß Schritt (b) das geschäumte Granulats umfassend das thermoplastische Elastomer (TPE-2) in die Form eingefüllt wird. Die Menge des eingefüllten geschäumten Granulats wird dabei an die Größe der Form und die gewünschte Formteildichte angepasst. Im Rahmen der vorliegenden Erfindung kann das Verfahren auch weitere Schritte umfassen, beispielsweise Temperaturanpassungen. Im Rahmen der vorliegenden Erfindung kann der Formkörper (FK) auch weitere Komponenten umfassen. Demgemäß können bei der Herstellung weitere Formteile oder geschäumte Partikel aus einem anderen Material verwendet werden.

Gemäß Schritt (c) wird der Formkörper (FK) durch Verschweißen bei einer Temperatur im Bereich von 100 bis 170 °C hergestellt. Die Temperatur bei dem Verschweißen der expandierten Partikel liegt bevorzugt zwischen 100°C und 140°C.

Dabei kann gemäß Schritt (c) das Verschweißen beispielsweise erfolgen indem die Komponenten in einer geschlossenen Form unter Wärmeeinwirkung miteinander verschweißt werden. Dazu füllt man die Komponenten, also mindestens das geschäumte Granulat und den Formkörper (FK-1) in die Form und leitet nach Schließen der Form Wasserdampf oder Heißluft ein, wodurch die Partikel des geschäumten Granulats weiter expandieren und miteinander und mit dem Formkörper (FK-1) zum Schaumstoff, vorzugsweise mit einer Dichte im Bereich von 8 bis 600 g/l, verschweißen. Die Schaumstoffe können Halbzeuge sein, beispielsweise Platten, Profile oder Bahnen, oder fertige Formteile mit einfacher oder komplizierter Geometrie.

Gemäß einer weiteren Ausführungsform betrifft die vorliegenden Erfindung auch einen Verfahren wie zuvor beschrieben, wobei das thermoplastische Elastomer (TPE-1) und das thermoplastische Elastomer (TPE-2) ausgewählt sind aus thermoplastischen Polyurethanen.

Gemäß einem weiteren Aspekt betrifft die vorliegende Erfindung auch einen Formkörper, erhalten gemäß einem Verfahren wie zuvor beschrieben.

Mit dem erfindungsgemäßen Verfahren können verschieden Materialien, beispielsweise auch bio-basierte thermoplastische Elastomere, oder thermoplastische Elastomere unterschiedlicher Einfärbung einfach verarbeitet werden und die Oberflächengeometrie kann sehr genau eingestellt werden. Durch das Erfindungsgemäße Verfahren kann auf weitere Schichten wie Klebstoffschichten verzichtet werden.

Vorteilhaft ist auch, dass die erfindungsgemäßen Schaumstoffe problemlos thermoplastisch recycelt werden können. Dazu werden beispielsweise die aufgeschäumten Materialien unter Verwendung eines Extruders mit einer Entgasungsvorrichtung extrudiert, wobei der Extrusion gegebenenfalls eine mechanische Zerkleinerung vorangehen kann. Danach können sie in der oben beschriebenen Weise wieder zu Schaumstoffen verarbeitet werden.

Weiterhin betrifft die vorliegende Erfindung auch die Verwendung eines Formkörpers (FK-1) aus einem thermoplastischen Elastomer (TPE-1) zur Herstellung eines Formkörpers in Gegenwart eines geschäumten Granulats aus einem thermoplastischen Elastomer (TPE-2), wobei der Formkörper (FK-1) eine Erweichungstemperatur TE(TPE-1) an der Oberfläche aufweist, die um höchstens 25°C von der Verarbeitungstemperatur TV(TPE-2) des thermoplastischen Elastomers (TPE-2) abweicht, wobei die Erweichungstemperatur bestimmt wird mittels TMA gemäß ISO 11359-3:2014 weist wobei der Verarbeitungstemperaturbereich des thermoplastischen Elastomers (TPE-2) TV(TPE-2) im Bereich von 100 bis 170°C liegt, wobei das thermoplastische Elastomer (TPE-1) in kompakter Form vorliegt und wobei das thermoplastische Elastomer (TPE-1) und das thermoplastische Elastomer (TPE-2) ausgewählt sind aus der Gruppe bestehend aus thermoplastischen Polyurethanen, thermoplastischen Polyetheramiden, Polyetherestern oder Polyesterestern, wobei das thermoplastische Elastomer (TPE-1) bei einer Temperatur unterhalb des Verarbeitungstemperaturbereichs TV(TPE-2) des thermoplastischen Elastomers (TPE-2) eine maximale Erweichung von weniger als 10% aufweist und in dem Verarbeitungstemperaturbereich TV(TPE-2) des thermoplastischen Elastomers (TPE-2) eine Erweichung im Bereich von 3 bis 12% aufweist, wobei die Erweichung bestimmt wird mittels TMA gemäß ISO 11359-3:2014 (Gewicht 15 g, Heizrate 20 K/min, runder Stempel mit Durchmesser 3 mm, TPU Probengeometrie: Durchmesser 4 mm und Dicke 2 mm),
wobei die Verarbeitungstemperatur dem Schmelzendotherm der Hartphase entspricht, bestimmt mittels DSC Messungen an für 10 Minuten bei 100 °C vorgetrockneten Proben mit einer Heizrate von 20 K/min gemäß DIN 11357-3:2013 und DIN EN 11357-1:2016.

Die erfindungsgemäßen Formkörper können in verschiedenen Bereichen eingesetzt werden. Gemäß einem weiteren Aspekt betrifft die vorliegende Erfindung auch die Verwendung eines erfindungsgemäßen Formkörpers, wobei der Formkörper ein geeignet ist für eine Anwendung im Bereich Sport, Industrie, Medizin, Sportmedizin, Sicherheit, Automobil und Konsumgüter. Weiterhin betrifft die vorliegende Erfindung auch die Verwendung eines erfindungsgemäßen Formkörpers, wobei der Formkörper eine Schuhsohle, ein Teil einer Schuhsohle, ein Fahrradsattel, eine Polsterung, eine Matratze, Unterlage, Griff, Schutzfolie, ein Bauteil im Automobilinnen- und -außenbereich ist. Besonders geeignet sind die erfindungsgemäßen Formkörper für die Verwendung als Schuhaußensohle.

### Kurze Beschreibung der Figuren:

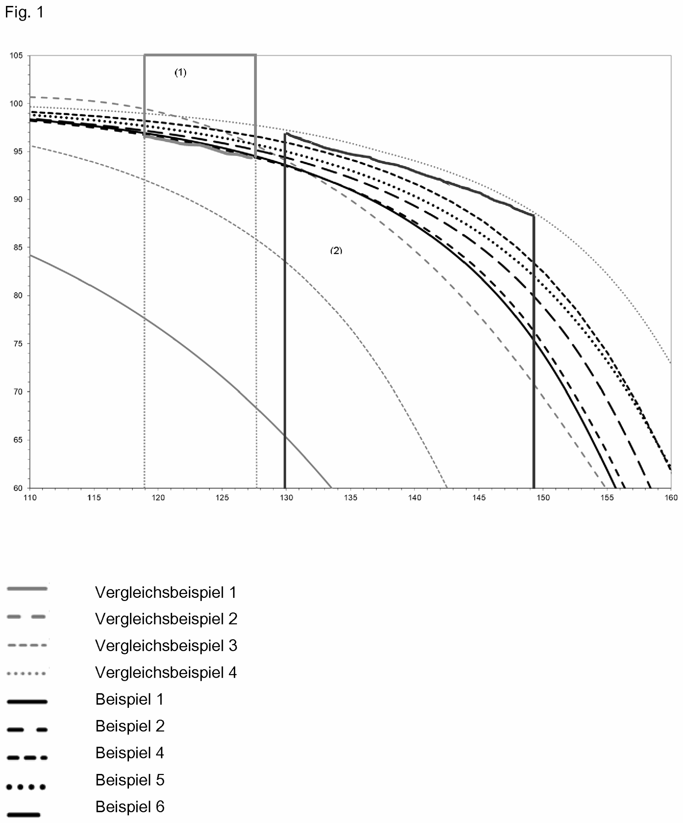

Fig. 1: zeigt die Ergebnisse der TMA-Messungen (Heizrate 20 K/min). Es ist die Tiefe in % (y-Achse) über der Temperatur in °C (x-Achse) aufgetragen. Gezeigt sind Beispiele 1, 2, 4, 5 und 6 sowie die Vergleichsbeispiele 1 bis 4. Es wurde direkt an den ungetemperten Außensohlen gemessen. Nur im Falle der Vergleichsbeispiels 1 und 2 wurde die Sohle vor TMA Messung 10 h/70 °C getempert.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Einsatzstoffe

Folgende Einsatzstoffe wurden eingesetzt:
- Polyol 1:: Polyetherpolyol mit einer zahlenmittleren Molmasse von 1 kg/mol und ausschließlich primären OH- Gruppen (basierend auf Tetramethylenoxid, Funktionalität: 2)
- Polyol 2:: Polyetherpolyol mit einer zahlenmittleren Molmasse von 2 kg/mol und ausschließlich primären OH- Gruppen (basierend auf Tetramethylenoxid, Funktionalität: 2)
- Isocyanat 1:: aromatisches Isocyanat (4,4' Methylendiphenyldiisocyanat)
- KV 1:: 1,4- Butandiol
- Weichmacher 1:: Acetyltributylcitrat, kurz ATBC, später auch WM1 genannt
- Katalysator 1:: Zinn-II-isooctoat (50 %ig in Dioktyladipat)
- Stabilisator 1:: Sterisch gehindertes Phenol
- Verarbeitungshilfsmittel 1:: Ethylen-bis-stearoyl-amid, später auch VHM1 genannt
- Vernetzer 1:: TPU 1, welches in einem separaten Extrusionsschritt mit 40% eines 2,4 funktionalen Präpolymer basierend auf 4,4'-Methylendiphenyldiisocyanat (MDI), polymeren MDI und einem Polyetherpolyol mit einer zahlenmittleren Molmasse von 0,5 kg/mol und ausschließlich primären OH- Gruppen (basierend auf Tetramethylenoxid, Funktionalität: 2), dessen Rest-NCO 28,5 g/100 g (ASTM D 5155-96) beträgt, versetzt wurde

### 1.1 Herstellung des TPUs 1

Eine Mischung aus 5,72 Massenprozent 1,4-Butandiol und 62,72 Massenprozent Polytetrahydrofuran mit einer zahlenmittleren Molmasse Mn von 1000 g/mol wurde auf 70 °C erwärmt und in einem Mischkopf mit 31,56 Massenprozent 4,4'-Diphenylmethandiisocyanat intensiv in Gegenwart von 1.0 Massenprozent an Crodamide EBS Wachs bezogen auf die ersten drei Komponenten gemischt. Das erhaltene Reaktionsgemisch wurde mit einer Temperatur von 90 °C auf ein umlaufendes PTFE-Band aufgebracht. Die am Ende des Bandes zu einer festen Schwarte erstarrte Reaktionsmischung wurde mit ca. 80 °C über Einzugswalzen kontinuierlich direkt einer Zerkleinerungs- und Homogenisierungsvorrichtung zugeführt. Dort wurde es bei Temperaturen von ca. 105 °C zerkleinert und in einen tangentialen angeflanschten Einwellenextruder gefördert. Die Gehäusetemperaturen lagen im Einzugsbereich bei etwa 170 °C bis 190 °C, in der Mittelzone bei 190 bis 220 °C. Die an der Düsenplatte austretenden Schmelze wurde mit einer Unterwassergranulierung zu gleichmäßigem Linsengranulat mit einer Masse von 32 mg konfektioniert und anschließend getrocknet.

### 1.2 Herstellung des eTPUs

In einem Imprägnierkessel mit einem Füllgrad von 80% wurde das TPU 1 Granulat zu einem Gemisch aus Wasser mit Calciumcarbonat und einer oberflächenaktiven Substanz gegeben, sodass das Fest-/Flüssigphasenverhältnis 0,32 betrug. Der gasdichte Kessel wurde zunächst mit Stickstoff gespült, ehe das Treibmittel Butan mit den in der Tabelle angegeben Mengen bezogen auf die Festphase (TPU) aufgepresst wurde. Der Kessel wurde unter Rühren der Fest/Flüssigphase erhitzt und bei einer Temperatur von 50 °C definiert Stickstoff bis zu einem Druck von 8 bar aufgepresst. Anschließend wurde bis zur gewünschten Imprägniertemperatur (IMT) weiter geheizt. Bei Erreichen der Imprägniertemperatur und des Imprägnierdruckes wurde nach einer gegebenen Haltezeit der Kessel über ein Ventil entspannt. Die genauen Herstellparameter der Versuche sowie die erzielten Schüttdichten sind in der nachfolgenden Tabelle 1 aufgelistet.

**Tabelle 1**

| Bezeichnung | Treibmittelkonzentration bezogen auf die Menge Festphase (Gew. %) | Haltezeit (Bereich IMT - 5°C bis IMT + 2°C) (min) | IMT (°C) | Schüttdichte (g/L) |
|---|---|---|---|---|
| eTPU 1 | 30 | 9 | 120 | 106 |

### 2. Herstellung Vergleichsbeispiele + Beispiele (kompaktes TPU)

### 2.1 Herstellverfahren 1 - (2-stufiges Verfahren, beinhaltend ersten Schritt,

Reaktionsextrusionsverfahren ohne WM, mit Polyol Mischung, und zweiten Schritt, Einarbeitung von WM1 auf Zweiwellenextruder), Verfahren zur kontinuierlichen Synthese von Vergleichsbeispiel 1

In das erste Gehäuse eines Zweiwellenextruders Typ ZSK 92 der Firma Werner & Pfleiderer, Stuttgart mit einer Verfahrenslänge von 56 D wurde eine Mischung aus KV1, Verarbeitungshilfsmittel 1, Stabilisator 1, Polyol 1 und Polyol 2 mit einer Vorlagetemperatur von 150 °C einerseits sowie getrennt hiervon das Isocyanat 1 mit einer Vorlagetemperatur von 65 °C in das erste Gehäuse desselben dosiert. Die Drehzahl der Doppelschnecke betrug 280 min⁻¹. Die Temperatureinstellwerte der Gehäuse lagen in Stromabrichtung im ersten Schneckendrittel bei 190 °C, im zweiten und dritten Schneckendrittel bei 190 °C. Der Ausstoß betrug 850 kg/h. Auf diesem Wege wird das thermoplastische Polyurethan (TPU) im bekannten Reaktionsextruderverfahren synthetisiert. Die so erhaltene granulierfähige Reaktionsschmelze kann im Folgeprozess, der sogenannten Unterwassergranulierung, zu Linsengranulaten umgeformt werden. Durch die anschließende Nachbehandlung der Granulate, bei ca. 80 bis 90 °C, werden diese getrocknet und danach in transportfähige Gebinde abgepackt. Das hieraus erhaltene Vorprodukt 1 wird wie folgt beschrieben weiterverarbeitet.

In das erste Gehäuse eines Zweiwellenextruders Typ ZE 65 der Firma Berstorff, mit einer Verfahrenslänge von 42 D wird Vorprodukt 1 mit einer Vorlagetemperatur von ca. 30 °C dosiert. Getrennt hiervon wird Weichmacher 1 mit einer Vorlagetemperatur von 40 °C in das vierte Gehäuse desselben dosiert. Die Drehzahl der Doppelschnecke beträgt 160 min⁻¹. Die Temperatureinstellwerte der Gehäuse liegen in Stromabrichtung im ersten Schneckendrittel bei 190 °C, im zweiten und dritten Schneckendrittel bei 170 °C. Der Ausstoß beträgt 300 kg/h. Auf diesem Wege wird das thermoplastische Polyurethan (TPU) im bekannten Compoundierverfahren hergestellt. Die so erhaltene granulierfähige Polymerschmelze kann im Folgeprozess, der sogenannten Unterwassergranulierung, zu Linsengranulaten umgeformt werden. Durch die anschließende Nachbehandlung der Granulate, bei ca. 80 °C, werden diese getrocknet und danach in transportfähige Gebinde abgepackt, in diesem Fall 25kg PE-Säcke.

Das so erhaltene TPU-Granulat wird vor der Weiterverarbeitung für 3h bei 80 bis 100°C vorgetrocknet und dann im Spritzguss zu Prüfkörpern umgeformt. Die Zonentemperaturen der hierzu verwendeten Spritzgussaggregate liegen zwischen 190 °C und 220 °C. aus den so erhaltenen Probeplatten werden S2-Prüfstäbe ausgestanzt und diese den weiteren mechanischen Tests unterzogen. Desweiteren werden an diesen Probekörpern die chemischen Werte, wie z.B. Molmasse, ermittelt.

### 2.2 Herstellverfahren 2 - Dryblend, d.h., Abmischung von TPU Granulat mit Vernetzer 1, Verfahren für die kontinuierliche Synthese von Vergleichsbeispiel 2

98,5 Gewichtsteile eines wie unter 2.1 hergestelltes TPU Granulates, werden zur Weiterverarbeitung für 3h bei 80 bis 100°C vorgetrocknet und im Anschluss mit 1,5 Gewichtsteilen Vernetzer 1 abgemischt.

Die so erhaltene TPU-Granulat Mischung wird im Spritzguss zu Prüfkörpern umgeformt. Die Zonentemperaturen der hierzu verwendeten Spritzgussaggregate liegen zwischen 190 °C und 220 °C. Aus den so erhaltenen Probeplatten werden S2-Prüfstäbe ausgestanzt und diese den weiteren mechanischen Tests unterzogen. Desweiteren werden an diesen Probekörpern die chemischen Werte, wie z.B. Molmasse, ermittelt.

Die Synthese und Eigenschaften von den erhaltenen thermoplastischen Polyurethanen sind in Tabelle 2 und 3 zusammengefasst. Die unter Verwendung dieser Prozesse hergestellten Muster dienen als Vergleichsbeispiele 1+2.

**Tabelle 2: Synthese von Vergleichsbeispiel 1+2:**

| | Vorprodukt 1 | Vergleichsbeispiel 1 | Vergleichsbeispiel 2 |
|---|---|---|---|
| Polyol 1 [g] | 500 | | |
| Polyol 2 [g] | 500 | | |
| Isocyanat 1 [g] | 372 | | |
| KV 1 [g] | 65 | | |
| Stabilisator 1 [g] | 14,5 | | |
| Vorprodukt 1 [g] | | 850 | |
| Weichmacher 1 [g] | | 150 | |
| Verarbeitungshilfsmittel 1 [g] | <1 | | |
| Vergleichsbeispiel 1 [g] | | | 985 |
| Vernetzer 1 [g] | | | 15 |
| Kennzahl | 1010 | - | - |

**Tabelle 3: Eigenschaften Vergleichsbeispiel 1+2:**

| | Vergleichsbeispiel 1 | Vergleichsbeispiel 2 |
|---|---|---|
| Shore A | 62 | 63 |
| Zugfestigkeit [MPa] | 26 | 27 |
| Reißdehnung [%] | 975 | 890 |
| Weiterreißwiderstand [kN/m] | 41 | 45 |
| Abrieb [mm³] | 60 | 53 |
| GPC Molmasse [10³ Dalton] | 125 | 260 |

### 2.3 Herstellverfahren 3 - (1-stufiges Reaktionsextrusionsverfahren mit WM1 + Polyol Mischung), Verfahren zur kontinuierlichen Synthese von Vergleichsbeispiel 3, sowie Beispiel 3

In das erste Gehäuse eines Zweiwellenextruders Typ ZSK 92 der Firma Werner & Pfleiderer, Stuttgart mit einer Verfahrenslänge von 56 D wurde eine Mischung aus KV1, Verarbeitungshilfsmittel 1, Stabilisator 1, Polyol 1 und Polyol 2 mit einer Vorlagetemperatur von 150 °C einerseits sowie getrennt hiervon das Isocyanat 1 mit einer Vorlagetemperatur von 65 °C in das erste Gehäuse desselben dosiert. Getrennt hiervon wird Weichmacher 1 mit einer Vorlagetemperatur von 40 °C in ein stromabwärts liegendes Gehäuse im letzten Drittel desselben dosiert. Die Drehzahl der Doppelschnecke betrug 280 min⁻¹. Die Temperatureinstellwerte der Gehäuse lagen in Stromabrichtung im ersten Schneckendrittel bei 190 °C, im zweiten und dritten Schneckendrittel bei 170 °C. Der Ausstoß betrug 600 kg/h. Auf diesem Wege wird das thermoplastische Polyurethan (TPU) im bekannten Reaktionsextruderverfahren synthetisiert. Die so erhaltene granulierfähige Reaktionsschmelze kann im Folgeprozess, der sogenannten Unterwassergranulierung, zu Linsengranulaten umgeformt werden. Durch die anschließende Nachbehandlung der Granulate, bei ca. 80 bis 90 °C, werden diese getrocknet und danach in transportfähige Gebinde abgepackt.

Das so erhaltene TPU-Granulat wird vor der Weiterverabeitung für 3h bei 80 bis 100°C vorgetrocknet und dann im Spritzguss zu Prüfkörpern umgeformt. Die Zonentemperaturen der hierzu verwendeten Spritzgussaggregate liegen zwischen 190 °C und 220 °C. aus den so erhaltenen Probeplatten werden S2-Prüfstäbe ausgestanzt und diese den weiteren mechanischen Tests unterzogen. Des weiteren werden an diesen Probekörpern die chemischen Werte, wie z.B. Molmasse, ermittelt.

### 2.4 Herstellverfahren 4 - (1-stufiges Reaktionsextrusionsverfahren mit WM1 + einem Polyol), Verfahren zur kontinuierlichen Synthese von Vergleichsbeispiel 4, sowie Beispiel 1,2,4,5,6,7

In das erste Gehäuse eines Zweiwellenextruders Typ ZSK 92 der Firma Werner & Pfleiderer, Stuttgart mit einer Verfahrenslänge von 56 D wurde eine Mischung aus KV1, Verarbeitungshilfsmittel 1, Stabilisator 1, Polyol 2 mit einer Vorlagetemperatur von 150 °C einerseits sowie getrennt hiervon das Isocyanat 1 mit einer Vorlagetemperatur von 65 °C in das erste Gehäuse desselben dosiert. Getrennt hiervon wird Weichmacher 1 mit einer Vorlagetemperatur von 40 °C in ein stromabwärts liegendes Gehäuse im letzten Drittel desselben dosiert. Die Drehzahl der Doppelschnecke betrug 280 min⁻¹. Die Temperatureinstellwerte der Gehäuse lagen in Stromabrichtung im ersten Schneckendrittel bei 190 °C, im zweiten und dritten Schneckendrittel bei 170 °C. Der Ausstoß betrug 600 kg/h. Auf diesem Wege wird das thermoplastische Polyurethan (TPU) im bekannten Reaktionsextruderverfahren synthetisiert. Die so erhaltene granulierfähige Reaktionsschmelze kann im Folgeprozess, der sogenannten Unterwassergranulierung, zu Linsengranulaten umgeformt werden. Durch die anschließende Nachbehandlung der Granulate, bei ca. 80 bis 90 °C, werden diese getrocknet und danach in transportfähige Gebinde abgepackt.

Das so erhaltene TPU-Granulat wird vor der Weiterverabeitung für 3h bei 80 bis 100°C vorgetrocknet und dann im Spritzguss zu Prüfkörpern umgeformt. Die Zonentemperaturen der hierzu verwendeten Spritzgussaggregate liegen zwischen 190 °C und 220 °C. aus den so erhaltenen Probeplatten werden S2-Prüfstäbe ausgestanzt und diese den weiteren mechanischen Tests unterzogen. Des Weiteren werden an diesen Probekörpern die chemischen Werte, wie z.B. Molmasse, ermittelt.

Die Synthese und Eigenschaften von den erhaltenen thermoplastischen Polyurethanen sind in Tabelle 4,5,6 und 7 zusammengefasst. Die unter Verwendung dieser Prozesse hergestellten Muster dienen als Vergleichsbeispiele 3 und 4 sowie der Bespiele 1,2,4,5,6 und 7.

**Tabelle 4: Synthese von Vergleichsbeispiel 3+4:**

| | Vergleichsbeispiel 3 | Vergleichsbeispiel 4 |
|---|---|---|
| Polyol 1 [g] | 500 | |
| Polyol 2 [g] | 500 | 1000 |
| Isocyanat 1 [g] | 295 | 295 |
| KV 1 [g] | 35,6 | 59,0 |
| Stabilisator 1 [g] | 15,8 | 16,1 |
| Weichmacher 1 [g] | 237,6 | 241,8 |
| Verarbeitungshilfsmittel 1[g] | <1 | <1 |
| Kennzahl | 1030 | 1022 |

**Tabelle 5: Eigenschaften Vergleichsbeispiel 3+4:**

| | Vergleichsbeispiel 3 | Vergleichsbeispiel 4 |
|---|---|---|
| Shore A | 65 | 64 |
| Zugfestigkeit [MPa] | 34 | 23 |
| Reißdehnung [%] | 700 | 590 |
| Weiterreißwiderstand [kN/m] | 42 | 31 |
| Abrieb [mm³] | 39 | 31 |
| GPC Molmasse [10³ Dalton] | 200 | 257 |

**Tabelle 6: Synthese von Beispiel 1,2,3,4,5,6,7:**

| | Bsp. 1 | Bsp. 2 | Bsp. 3 | Bsp.4 | Bsp.5 | Bsp. 6 | Bsp. 7 |
|---|---|---|---|---|---|---|---|
| Polyol 1 [g] | | | 850 | Dry Blend aus Vergleich s-Bsp 4 & Beispiel | Dry Blend aus Vergleich s-Bsp 4 & Beispiel | Dry Blend aus Vergleich s-Bsp 4 & Beispiel | |
| Polyol 2 [g] | 1000 | 1000 | 150 | | | | 1000 |
| Isocyanat 1 [g] | 295 | 295 | 340 | | | | 295 |
| KV 1 [g] | 61,6 | 61,3 | 70,6 | | | | 61,3 |
| Stabilisator 1 [g] | 16,1 | 16,1 | 16,8 | | | | 16,1 |
| Weichmacher 1 [g] | 242,2 | 242, 2 | 251, 9 | | | | 242,2 |
| VHM 1 [g] | <1 | <1 | <1 | 1 (Massenverhältni s 2:1) | 1 (Massenverhältni s 1:1) | 1 (Massenverhältni s 1:2) | <1 |
| Kennzahl | 1009 | 1012 | 1020 | | | | 1000 |
| Berechnete Kennzahl | | | | 1016 | 1013 | 1007 | |

**Tabelle 7: Eigenschaften Beispiel 1,2,3,4,5,6,7:**

| | Bsp. 1 | Bsp. 2 | Bsp. 3 | Bsp. 4 | Bsp. 5 | Bsp. 6 | Bsp. 7 |
|---|---|---|---|---|---|---|---|
| Shore A | 62 | 62 | 66 | 63 | 63 | 61 | 62 |
| Zugfestigkeit [MPa] | 37 | 38 | 28 | 41 | 33 | 33 | 32 |
| Reißdehnung [%] | 990 | 990 | 650 | 960 | 860 | 880 | 740 |
| Weiterreißwiderstand [kN/m] | 41 | 44 | 32 | 40 | 40 | 44 | 44 |
| Abrieb [mm³] | 40 | 38 | 35 | 32 | 35 | 38 | 30 |
| GPC Molmasse [10³ Dalton] | 150 | 160 | 248 | 233 | 211 | 180 | 155 |

Formköper (FK-1) wurden im Spritzgussprozess aus den beschriebenen TPU-Granulaten (Beispiele und Vergleichsbeispiele) hergestellt. Dazu wird vor dem Spritzguss das Granulat für 3h bei 80 bis 100°C vorgetrocknet und dann im Spritzguss zu dem Formkörper (FK-1) umgeformt. Die Zonentemperaturen der hierzu verwendeten Spritzgussaggregate liegen zwischen 190 °C und 220 °C. Gegebenfalls wird der erhaltene Formköper (FK-1) einer Reifung (Annealing durch Temperung, 10 h bei 70 °C) unterzogen, wie in Tabelle 8 vermerkt.

Die Herstellung des finalen Formkörpers (FK) erfolgt in mehreren Teilschritten:
a. Einlegen des Formkörper (FK-1), der Löcher aufweist, durch die der Wasserdampf durchtreten kann, in ein Werkzeug eines Wasserdampfformteilautoamten der Firma Kurtz (Boost Foamer)
b. Einfüllen des geschäumten Granulats eTPU 1
c. Beaufschlagung mit Wasserdampf und gleichzeitiges Verschweißen von den eTPU 1 untereinander und mit dem Formkörper FK-1 bei einer Temperatur von 130 bis 135 °C
d. Annealing des finalen FK 4 h bei 70 °C

Die in Tabelle 8 beschriebenen Eigenschaftsmerkmale, wurde wie folgt bewertet:
1. Der Formerhalt wurde am Formkörper (FK-1) nach Erhalt des Formkörpers FK optisch bewertet. Mit der Bezeichnung "schlecht" wird eine Veränderung der Struktur von FK-1 benannt wie beispielsweise der Konturschärfe, Deformation, Glanz oder Verlaufen der Struktur, die zu einer Beeinträchtigung der Oberflächenoptik führen.
2. Aus dem Formkörper FK wurden alle zwei Zentimeter umlaufend ein 10 mm Streifen herausgeschnitten. Nachdem in dem Formkörper FK ein Spalt eingebracht wurde, wurde die Haftung durch Messung der Zugfestigkeit bestimmt. Hierzu wurde der Formköper FK-1 und das verschweißte Granulat in entgegengesetzter Richtung mit einer Geschwindigkeit von 100 mm/min in einer Zugprüfmaschine auseinandergezogen. Mit "gut" wird eine Probe bezeichnet, die in dieser Prüfung eine Zugfestigkeit von größer 2.7 N/mm aufweist.
3. Die Lagerstabilität bezieht sich auf die Veränderung des TPU Granulats nach der Synthese und vor der Verarbeitung. Mit der Bezeichnung "schlecht" ist eine übermäßige Veränderung der Probenkonsistenz gemeint.
4. Prozessstabilität bezieht sich auf die Konsistenz des Herstellungsprozesses von FK-1 und dessen Veränderung über die Zeit. Mit der Bezeichnung "schlecht" ist eine übermäßige Veränderung der Prozesskonsistenz gemeint.
5. Die thermische, mechanische Analyse (TMA) erfolgte nach ISO 11359 (2014), Heizrate 20 K/Min, Gewicht 15 g, runder Stempel mit Durchmesser 3 mm, TPU Probengeometrie: Durchmesser 4 mm und Dicke 2 mm.

Es konnten zwei Bereiche (Zone (1) und Zone (2), in Figur 1 dargestellt) ermittelt werden, die für die Beurteilung der Haftung im Falle eines Prozesses, bei dem geschäumte Partikel in Gegenwart eines Bauteils verschweißt werden, bzw. des Formerhalts der Konturen der Bauteile charakteristisch sind.

**Tabelle 8: Herstellung des Formkörper (FK) aus unter anderem eTPU-1.**

| | Kennzahl des TPUs | Vernet zer 1 in TPU enthalt end | GPC* | TMA | | Bewertung | | Lagerstabilität | Prozess stabilität | Annealing von FK-1 durch Temperung (10 h bei 70°C) |
|---|---|---|---|---|---|---|---|---|---|---|
| | | | Molmasse [kD] | Zone 1 | Zone 2 | Formerhalt | Haftung | | | |
| **Vergleichs-Bsp 1** | 1010 | - | 125 | nein | ja | Schlecht | Gut | Gut | Gut | Erforderlich |
| **Vergleichs-Bsp 2** | 1010 | 1.5% | 260 | ja | ja | Gut | Gut | Gut | schlecht | Erforderlich |
| **Vergleichs-Bsp 3** | 1030 | - | 200 | nein | ja | Schlecht | Gut | schlecht | Gut | Nicht erforderlich |
| **Vergleichs-Bsp 4** | 1022 | - | 257 | ja | nein | Gut | Schlecht | Schlecht | Gut | Nicht erforderlich |
| **Beispiel 1** | 1009 | - | 150 | ja | ja | Gut | Gut | Gut | Gut | Nicht erforderlich |
| **Beispiel 2** | 1012 | - | 160 | ja | ja | Gut | Gut | Gut | Gut | Nicht erforderlich |
| **Beispiel 3** | 1020 | - | 248 | | | Gut | Gut | Schlecht | Gut | Nicht erforderlich |
| **Beispiel 4** | 1016 | - | 233 | ja | ja | Gut | Gut | Schlecht | Gut | Nicht erforderlich |
| **Beispiel 5** | 1013 | - | 211 | ja | ja | Gut | Gut | Schlecht | Gut | Nicht erforderlich |
| **Beispiel 6** | 1007 | - | 180 | ja | ja | Gut | Gut | Schlecht | Gut | Nicht erforderlich |
| **Beispiel 7** | 1000 | - | 155 | | | Gut | Gut | Gut | Gut | Nicht erforderlich |

| | | | | | | | | | | |
|---|---|---|---|---|---|---|---|---|---|---|
| *von gereiftem Material (6 Wochen bei RT) | | | | | | | | | | |

Die Ergebnisse zeigen, dass gute Produkte unter Verwendung eines thermoplastischen Polyurethans erhalten werden, dass auf PTHF mit einem Mn > 1500 g/mol basiert und bei der Herstellung eine Kennzahl von 1020 nicht überschritten wird.

Wie insbesondere das Vergleichsbeispiel 2 zeigt ergeben sich bei der Verwendung von Vernetzer 1 durch die große Anfälligkeit von dem Vernetzer 1 Probleme in der Produktion, die sich beispielsweise beim Schrumpf der Sohle niederschlagen. Dies führt dazu, dass die Sohlen zusätzlich getempert werden müssen, was aufwendiger ist. Die Temperung der Sohlen (FK-1) wurde für diese Proben so angepasst, dass die Sohlen bei der Herstellung des finalen Formkörpers FK keine Formveränderung mehr zeigen und dass der Schrumpf von FK-1 nicht zu stark ausfällt. Daher wird bei diesen Proben 10 h bei 70 °C getempert.

### 3. Messmethoden/Normen:

- Shore A:: DIN ISO 7619-1 (02/2012)
- Zugfestigkeit: DIN 53504 (03/2017) national für Deutschland, international DIN EN ISO 527-2 (06/2012)
- Reißdehnung: DIN 53504 (03/2017) national für Deutschland, international DIN EN ISO 527-2 (06/2012)
- Weiterreißfestigkeit: (mit Einschnitt): DIN ISO 34-1, B (b] (09/2016)
- Abriebbestimmung: DIN ISO 4649 (03/2014)
- Gelpermeationschromatographie (GPC):: DIN 55672-2 (2008), Proben wurden zuvor bei 80°C, 0,5%ig in Amin-haltigem DMF vollständig aufgelöst. Als Fließmittel wurde ebenfalls DMF eingesetzt.
- Thermische, mechanische Analyse (TMA):: ISO 11359 (2014), Heizrate 20 K/Min, Gewicht 15 g, runder Stempel mit Durchmesser 3 mm, TPU Probengeometrie: Durchmesser 4 mm und Dicke 2 mm

### Zitierte Literatur:

Ullmanns "Encyklopädie der technischen Chemie", 4. Auflage, Band 20, S. 416 ff.
WO 94/20568 A1
WO 2007/082838 A1
"Polymer Chemistry", Interscience Publ., New York, 1961, S.111-127
Kunststoffhandbuch, Band VIII, C. Hanser Verlag, München 1973
Journal of Polymer Science, Part A1, 4, Seiten 1851-1859 (1966)
Kunststoffhandbuch, Band 7, "Polyurethane", Carl Hanser Verlag, 3. Auflage 1993, Kapitel 3.1 Kunststoffhandbuch, Band VII, Vieweg und Höchtlen, Carl Hanser Verlag, 1966, S. 103-113 WO 2007/118827 A1

## Patentansprüche

1. Verfahren zur Herstellung eines Formkörpers (FK), umfassend die Schritte:
(a) Bereitstellen eines Formkörpers (FK-1), umfassend ein thermoplastisches Elastomer (TPE-1) in einer Form,
(b) Einfüllen eines geschäumten Granulats umfassend ein thermoplastisches Elastomer (TPE-2) in die Form, wobei das thermoplastische Elastomer (TPE-2) eine Verarbeitungstemperatur TV(TPE-2) aufweist,
(c) Herstellen des Formkörpers (FK) durch Verschweißen bei einer Temperatur im Bereich von 100 bis 170 °C,
wobei der Formkörper (FK-1) eine Erweichungstemperatur TE(TPE-1) aufweist, die um höchstens 25°C von der Verarbeitungstemperatur TV(TPE-2) des thermoplastischen Elastomers (TPE-2) abweicht, wobei die Erweichungstemperatur bestimmt wird mittels TMA gemäß ISO 11359-3:2014 und der Verarbeitungstemperaturbereich des thermoplastischen Elastomers (TPE-2) TV(TPE-2) im Bereich von 100 bis 170°C liegt,
wobei das thermoplastische Elastomer (TPE-1) in kompakter Form vorliegt und
wobei das thermoplastische Elastomer (TPE-1) und das thermoplastische Elastomer (TPE-2) ausgewählt sind aus der Gruppe bestehend aus thermoplastischen Polyurethanen, thermoplastischen Polyetheramiden, Polyetherestern oder Polyesterestern,
wobei das thermoplastische Elastomer (TPE-1) bei einer Temperatur unterhalb des Verarbeitungstemperatur TV(TPE-2) des thermoplastischen Elastomers (TPE-2) eine maximale Erweichung von weniger als 10% aufweist und in dem Verarbeitungstemperaturbereich TV(TPE-2) des thermoplastischen Elastomers (TPE-2) eine Erweichung im Bereich von 3 bis 12% aufweist, wobei die Erweichung bestimmt wird mittels TMA gemäß ISO 11359-3:2014 (Gewicht 15 g, Heizrate 20 K/min, runder Stempel mit Durchmesser 3 mm, TPU Probengeometrie: Durchmesser 4 mm und Dicke 2 mm),
wobei die Verarbeitungstemperatur dem Schmelzendotherm der Hartphase entspricht, bestimmt mittels DSC Messungen an für 10 Minuten bei 100 °C vorgetrockneten Proben mit einer Heizrate von 20 K/min gemäß DIN 11357-3:2013 und DIN EN 11357-1:2016.

2. Verfahren gemäß Anspruch 1, wobei das thermoplastische Elastomer (TPE-1) und da thermoplastische Elastomer (TPE-2) ausgewählt sind aus thermoplastischen Polyurethanen.

3. Formkörper, erhalten gemäß einem Verfahren nach einem der Ansprüche 1 oder 2.

4. Verwendung eines Formkörpers (FK-1) gemäß Anspruch 3 aus einem thermoplastischen Elastomer (TPE-1) zur Herstellung eines Formkörpers in Gegenwart eines geschäumten Granulats aus einem thermoplastischen Elastomer (TPE-2), wobei der Formkörper (FK-1) eine Erweichungstemperatur TE(TPE-1) aufweist, die um höchstens 25°C von der Verarbeitungstemperatur TV(TPE-2) des thermoplastischen Elastomers (TPE-2) abweicht, wobei die Erweichungstemperatur bestimmt wird mittels TMA gemäß ISO 11359-3:2014, wobei der Verarbeitungstemperaturbereich des thermoplastischen Elastomers (TPE-2) TV(TPE-2) im Bereich von 100 bis 170°C liegt,
wobei das thermoplastische Elastomer (TPE-1) in kompakter Form vorliegt und
wobei das thermoplastische Elastomer (TPE-1) und das thermoplastische Elastomer (TPE-2) ausgewählt sind aus der Gruppe bestehend aus thermoplastischen Polyurethanen, thermoplastischen Polyetheramiden, Polyetherestern oder Polyesterestern,
wobei das thermoplastische Elastomer (TPE-1) bei einer Temperatur unterhalb des Verarbeitungstemperaturbereichs TV(TPE-2) des thermoplastischen Elastomers (TPE-2) eine maximale Erweichung von weniger als 10% aufweist und in dem Verarbeitungstemperaturbereich TV(TPE-2) des thermoplastischen Elastomers (TPE-2) eine Erweichung im Bereich von 3 bis 12% aufweist, wobei die Erweichung bestimmt wird mittels TMA gemäß ISO 11359-3:2014 (Gewicht 15 g, Heizrate 20 K/min, runder Stempel mit Durchmesser 3 mm, TPU Probengeometrie: Durchmesser 4 mm und Dicke 2 mm),
wobei die Verarbeitungstemperatur dem Schmelzendotherm der Hartphase entspricht, bestimmt mittels DSC Messungen an für 10 Minuten bei 100 °C vorgetrockneten Proben mit einer Heizrate von 20 K/min gemäß DIN 11357-3:2013 und DIN EN 11357-1:2016.

5. Verwendung gemäß Anspruch 4, wobei der Formkörper ein geeignet ist für eine Anwendung im Bereich Sport, Industrie, Medizin, Sportmedizin, Sicherheit, Automobil und Konsumgüter.

6. Verwendung gemäß einem der Ansprüche 4 oder 5, wobei der Formkörper ein Teil einer Schuhsohle, ein Fahrradsattel, eine Polsterung, eine Matratze, Unterlage, Griff, Schutzfolie, ein Bauteil im Automobilinnen- und -außenbereich ist.

7. Verwendung gemäß einem der Ansprüche 4 bis 6, wobei der Formkörper eine Schuhaußensohle ist.

## Claims

1. Method for producing a molded body (MB), comprising the steps:
(a) Providing a molded body (MB-1) comprising a thermoplastic elastomer (TPE-1) in a mold,
(b) Filling a foamed granulate comprising a thermoplastic
elastomer (TPE-2) into the mold, wherein the thermoplastic elastomer (TPE-2) has a processing temperature TV(TPE-2),
(c) Producing the molded body (MB) by welding at a temperature in the range of 100 to 170 ^{°} C,
wherein the molded body (MB-1) has a softening temperature TE(TPE-1) that deviates by at most 25 ^{°} C from the processing temperature TV(TPE-2) of the thermoplastic elastomer (TPE-2), wherein the softening temperature is determined by means of TMA according to ISO 11359-3:2014 and the processing temperature range of the thermoplastic elastomer (TPE-2) TV(TPE-2) is in the range of 100 to 170 ^{°} C, wherein the thermoplastic elastomer (TPE-1) is present in compact form and
wherein the thermoplastic elastomer (TPE-1) and the thermoplastic elastomer (TPE-2) are selected from the group consisting of thermoplastic polyurethanes, thermoplastic polyetheramides, polyetheresters or polyesteresters,
wherein the thermoplastic elastomer (TPE-1) at a temperature below the processing temperature TV(TPE-2) of the thermoplastic elastomer (TPE-2) has a maximum softening of less than 10% and in the processing temperature range TV(TPE-2) of the thermoplastic elastomer (TPE-2) has a softening in the range of 3 to 12%, wherein the softening is determined by means of TMA according to ISO 11359-3:2014 (weight 15 g, heating rate 20 K/min, round punch with diameter 3 mm, TPU sample geometry: diameter 4 mm and thickness 2 mm),
wherein the processing temperature corresponds to the melting endotherm of the hard phase,
determined by means of DSC measurements on samples pre-dried for 10 minutes at 100 ^{°} C with a heating rate of 20 K/min according to DIN 11357-3:2013 and DIN EN 11357-1:2016.

2. Method according to claim 1, wherein the thermoplastic elastomer (TPE-1) and the thermoplastic elastomer (TPE-2) are selected from thermoplastic polyurethanes.

3. Molded body, obtained according to a method according to any one of claims 1 or 2.

4. Use of a molded body (MB-1) according to claim 3 made of a thermoplastic elastomer (TPE-1) for producing a molded body in the presence of a foamed granulate made of a thermoplastic elastomer (TPE-2), wherein the molded body (MB-1) has a softening temperature TE(TPE-1) that deviates by at most 25 ^{°} C from the processing temperature TV(TPE-2) of the thermoplastic elastomer (TPE-2), wherein the softening temperature is determined by means of TMA according to ISO 11359-3:2014, wherein the processing temperature range of the thermoplastic elastomer (TPE-2) TV(TPE-2) is in the range of 100 to 170 ^{°} C,
wherein the thermoplastic elastomer (TPE-1) is present in compact form and
wherein the thermoplastic elastomer (TPE-1) and the thermoplastic elastomer (TPE-2) are selected from the group consisting of thermoplastic polyurethanes, thermoplastic polyetheramides, polyetheresters or polyesteresters,
wherein the thermoplastic elastomer (TPE-1) at a temperature below the processing temperature range TV(TPE-2) of the thermoplastic elastomer (TPE-2) has a maximum softening of less than 10% and in the processing temperature range TV(TPE-2) of the thermoplastic elastomer (TPE-2) has a softening in the range of 3 to 12%, wherein the softening is determined by means of TMA according to ISO 11359-3:2014 (weight 15 g, heating rate 20 K/min, round punch with diameter 3 mm, TPU sample geometry: diameter 4 mm and thickness 2 mm),
wherein the processing temperature corresponds to the melting endotherm of the hard phase, determined by means of DSC measurements on samples pre-dried for 10 minutes at 100 ^{°} C with a heating rate of 20 K/min according to DIN 11357-3:2013 and DIN EN 11357-1:2016.

5. Use according to claim 4, wherein the molded body is suitable for an application in the field of sports, industry, medicine, sports medicine, safety, automotive and consumer goods.

6. Use according to any one of claims 4 or 5, wherein the molded body is a part of a shoe sole, a bicycle saddle, a cushioning, a mattress, underlay, grip, protective film, a component in the automotive interior and exterior area.

7. Use according to any one of claims 4 to 6, wherein the molded body is a shoe outsole.

## Revendications

1. Procédé de fabrication d'un corps moulé (FK), comprenant les étapes :
(a) Fourniture d'un corps moulé (FK-1) comprenant un élastomère thermoplastique (TPE-1) dans un moule,
(b) Remplissage d'un granulat expansé comprenant un élastomère thermoplastique (TPE-2) dans le moule, l'élastomère thermoplastique (TPE-2) présentant une température de mise en œuvre TV(TPE-2),
(c) Fabrication du corps moulé (FK) par soudage à une température comprise entre 100 et 170 ^{°} C,
le corps moulé (FK-1) présentant une température de ramollissement TE(TPE-1) qui s'écarte d'au plus 25 ^{°} C de la température de mise en œuvre TV(TPE-2) de l'élastomère thermoplastique (TPE-2), la température de ramollissement étant déterminée par TMA selon ISO 11359-3:2014 et la plage de température de mise en œuvre de l' élastomère thermoplastique (TPE-2) TV(TPE-2) étant comprise entre 100 et 170 ^{°} C, l'élastomère thermoplastique (TPE-1) se présentant sous forme compacte et l'élastomère thermoplastique (TPE-1) et l'élastomère thermoplastique (TPE-2) étant choisis dans le groupe constitué des polyuréthanes thermoplastiques, des polyétheramides thermoplastiques, des polyétheresters ou des polyesteresters, l'élastomère thermoplastique (TPE-1) présentant, à une température inférieure à la température de mise en œuvre TV(TPE-2) de l'élastomère thermoplastique (TPE-2), un ramollissement maximal inférieur à 10 % et, dans la plage de température de mise en œuvre TV(TPE-2) de l'élastomère thermoplastique (TPE-2), un ramollissement compris entre 3 et 12 %, le ramollissement étant déterminé par TMA selon ISO 11359-3:2014 (masse 15 g, vitesse de chauffage 20 K/min, poinçon rond de diamètre 3 mm, géométrie de l'échantillon TPU : diamètre 4 mm et épaisseur 2 mm),
la température de mise en œuvre correspondant à l'endotherme de fusion de la phase dure,
déterminée par des mesures DSC sur des échantillons préséchés pendant 10 minutes à 100 ^{°} C avec une vitesse de chauffage de 20 K/min selon DIN 11357-3:2013 et DIN EN 11357-1:2016.

2. Procédé selon la revendication 1, dans lequel l'élastomère thermoplastique (TPE-1) et l'élastomère thermoplastique (TPE-2) sont choisis parmi les polyuréthanes thermoplastiques.

3. Corps moulé, obtenu selon un procédé selon l'une des revendications 1 ou 2.

4. Utilisation d'un corps moulé (FK-1) selon la revendication 3 constitué d'un élastomère thermoplastique (TPE-1) pour la fabrication d'un corps moulé en présence d'un granulat expansé constitué d'un élastomère thermoplastique (TPE-2), le corps moulé (FK-1) présentant une température de ramollissement TE(TPE-1) qui s'écarte d'au plus 25 ^{°} C de la température de mise en œuvre TV(TPE-2) de l'élastomère thermoplastique (TPE-2), la température de ramollissement étant déterminée par TMA selon ISO 11359-3:2014, la plage de température de mise en œuvre de l'élastomère thermoplastique (TPE-2) TV(TPE-2) étant comprise entre 100 et 170 ^{°} C,
l'élastomère thermoplastique (TPE-1) se présentant sous forme compacte et
l'élastomère thermoplastique (TPE-1) et l'élastomère thermoplastique (TPE-2) étant choisis dans le groupe constitué des polyuréthanes thermoplastiques, des polyétheramides thermoplastiques, des polyétheresters ou des polyesteresters,
l'élastomère thermoplastique (TPE-1) présentant, à une température inférieure à la plage de température de mise en œuvre TV(TPE-2) de l'élastomère thermoplastique (TPE-2), un ramollissement maximal inférieur à 10 % et, dans la plage de température de mise en œuvre TV(TPE-2) de l'élastomère thermoplastique (TPE-2), un ramollissement compris entre 3 et 12 %, le ramollissement étant déterminé par TMA selon ISO 11359-3:2014 (masse 15 g, vitesse de chauffage 20 K/min, poinçon rond de diamètre 3 mm, géométrie de l'échantillon TPU : diamètre 4 mm et épaisseur 2 mm),
la température de mise en œuvre correspondant à l'endotherme de fusion de la phase dure, déterminée par des mesures DSC sur des échantillons préséchés pendant 10 minutes à 100 ^{°} C avec une vitesse de chauffage de 20 K/min selon DIN 11357-3:2013 et DIN EN 11357-1:2016.

5. Utilisation selon la revendication 4, dans laquelle le corps moulé est adapté à une application dans le domaine du sport, de l'industrie, de la médecine, de la médecine sportive, de la sécurité, de l'automobile et des biens de consommation.

6. Utilisation selon l'une des revendications 4 ou 5, dans laquelle le corps moulé est une partie d'une semelle de chaussure, une selle de vélo, un rembourrage, un matelas, un support, une poignée, un film de protection, un composant dans l'habitacle ou l'extérieur d'un véhicule automobile

7. Utilisation selon l'une des revendications 4 à 6, dans laquelle le corps moulé est une semelle extérieure de chaussure.
